# EUROPÄISCHE PATENTSCHRIFT

(11) **EP 1 924 376 B1**
(45) Veröffentlichungstag und Bekanntmachung des Hinweises auf die Patenterteilung: **24.02.2016**
(21) Anmeldenummer: 06762740.6
(22) Anmeldetag: 21.07.2006
(51) Int. Cl.: B23B 29/20, B23B 29/24

(54) **WERKZEUGREVOLVER**
TOOL REVOLVER
TOURELLE D'OUTIL

(30) Priorität: 13.09.2005 DE 102005045662
(43) Veröffentlichungstag der Anmeldung: 28.05.2008
(73) Patentinhaber: Sauter Feinmechanik GmbH, D-72555 Metzingen (DE)
(72) Erfinder: SAHM, Detlef, 73262 Reichenbach/Fils (DE); BIRK, Kurt, 72760 Reutlingen (DE); DIERINGER, Jochen, 72379 Hechingen-Stetten (DE); KIESSIG, Ralf, 72585 Riederich (DE)
(74) Vertreter: Bartels, Martin Erich Arthur
(86) Internationale Anmeldenummer: PCT/EP2006/007188
(87) Internationale Veröffentlichungsnummer: WO 2007/031145

(56) Entgegenhaltungen:
- EP-A1- 0 343 347
- WO-A-93/23191
- DE-A1- 19 919 236
- DE-C1- 19 958 461
- US-A- 5 875 696
- US-A- 5 921 159

## Beschreibung

Die Erfindung bezieht sich auf einen Werkzeugrevolver, insbesondere für Werkzeugmaschinen gemäß der Merkmalsausgestaltung des Oberbegriffes des Patentanspruches 1.

Werkzeugrevolver sind grundsätzlich bekannt, vgl. beispielsweise die Veröffentlichung WO 93/23191. Aufgrund der Möglichkeit, Werkzeughalter mit verschiedenen Bearbeitungswerkzeugen in schnellem Wechsel durch gesteuerte Rotation der Werkzeugscheibe in Stellung bringen zu können, werden solche Werkzeugrevolver in der industriellen Technik in großem Umfang verteilhaft eingesetzt.

Nachteilig ist bei derartigen Werkzeugrevolvern jedoch, dass bei einem Austausch von Bearbeitungswerkzeugen, wenn betreffende Werkzeughalter an der Aufnahme der Werkzeugscheibe anzubringen sind, eine Justierung des Werkzeughalters an der Aufnahme vorgenommen werden muss, um das Bearbeitungswerkstück auf eine gewünschte Position auszurichten. Bei dem bekannten Werkzeugrevolver der oben genannten Art ist hierbei für jeden Werkzeughalter eine Justierung mit Hilfe von Justierschrauben durchzuführen.

Durch die US-A-5 875 696 ist ein gattungsgemäßer Werkzeugrevolver, insbesondere für Werkzeugmaschinen, bekannt mit einer um eine Revolverachse drehbaren Werkzeugscheibe, die eine Mehrzahl von entlang ihres Umfanges verteilten Werkzeugstationen aufweist, die durch Drehen der Werkzeugscheibe jeweils in mindestens einer Arbeitsposition einstellbar sind, wobei an zumindest einem Teil der Werkzeugstationen eine Aufnahme für einen Werkzeughalter vorhanden ist und jeweils eine Befestigungseinrichtung vorgesehen ist, um einen jeweiligen Werkzeughalter an einer betreffenden Aufnahme in definierter Positionierung festzulegen, wobei zur Positionierung als Ausrichtmittel zumindest ein aus der Aufnahme vorstehender, senkrechter Passkörper sowie in einer Grundfläche des Werkzeughalters vertiefte Passflächen zur Zusammenwirkung mit dem zumindest einen Passkörper vorgesehen sind.

Bei der bekannten Lösung ist der jeweilige Passkörper als massives Ausrichtelement ausgebildet, das in senkrechter Richtung vorstehend einstückiger Bestandteil eines plattenförmigen, massiv ausgebildeten Haltekörpers ist, der mittels Schrauben und wiederum unter Einsatz von Justiermitteln in Form von Justierstiften fest mit dem Werkzeughalterkörper verbunden ist. In einer bevorzugten Ausführungsform weist der Passkörper ballig ausgebildete Anlageflächen in der Art eines Verzahnungselementes auf, die in Linienberührung mit zuordenbaren vertieften Passflächen einer Aufnahme der Werkzeugscheibe kommen, sobald ein Zahnstangensegment des Werkzeughalterkörpers in Eingriff mit einer korrespondierenden Aufnahme in der Werkzeugscheibe kommt und dort mittels eines Zahngegenstückes definiert festgelegt wird.

Ausgehend von diesem Stand der Technik liegt der Erfindung die Aufgabe zugrunde, einen Werkzeugrevolver zur Verfügung zu stellen, bei dem sichergestellt ist, dass betreffende Werkzeughalter, wenn sie mittels der Befestigungseinrichtung an der Aufnahme der Werkzeugscheibe festgelegt werden, eine genau vorgegebene Einstellposition einnehmen.

Erfindungsgemäß ist diese Aufgabe durch einen Werkzeugrevolver gelöst, der die Merkmale des Patentanspruches 1 in seiner Gesamtheit aufweist.

Dadurch, dass gemäß dem kennzeichnenden Teil des Patentanspruches 1 die Anordnung so getroffen ist, dass der jeweilige Passkörper elastisch nachgiebig ist und dass für den Erhalt der dahingehenden Federnachgiebigkeit unterhalb des jeweiligen Passkörpers zwischen der Unterseite der Aufnahme und der zugewandten Fläche der Werkzeugscheibe ein geringer Spielraum vorhanden ist, ist sichergestellt, dass der Werkzeughalter bei Festziehen der Verschraubung die genau gewünschte Einstellposition einnimmt. Durch die Erfindung ist daher das Erfordernis vermieden, bei jedem Einsetzen eines Werkzeughalters Justiermaßnahmen durchzuführen, beispielsweise durch Einbringen von Justierstiften oder dergleichen.

Vorzugsweise ist vorgesehen, eine elastische Nachgiebigkeit für den jeweiligen Passkörper bei äußerst hoher Federkonstante zu ermöglichen mit Auslenkungen, die jeweils nur im Mikrometerbereich liegen, so dass insoweit ein geringer Spielraum zwischen der Unterseite einer Platte der Aufnahme und der zugewandten Fläche der Werkzeugscheibe vorhanden ist.

Bei vorteilhaften Ausführungsbeispielen ist als Aufnahme an den jeweiligen Werkzeugstationen jeweils eine mit der Werkzeugscheibe verbundene Platte vorhanden, die mit ihrer, bezogen auf die Revolverachse, radial außen liegenden, ebenen Fläche beidseitig Anlageflächen der Werkzeugscheibe begrenzt, welche sich in einer zur Revolverachse parallelen Ebene erstrekken und an denen der jeweils zuordenbare Werkzeughalter mit seiner Grundfläche in Anlage bringbar ist. Für das Verspannen mit einer zur jeweiligen Anlagefläche in Form und Abmessung passend ausgebildeten Grundfläche eines anzubringenden Werkzeughalters steht daher eine großflächige, ebene Berührungsfläche zur Verfügung, was eine besonders sichere Fixierung mittels der Verschraubung begünstigt.

Bei besonders vorteilhaften Ausführungsbeispielen ist an beiden Enden der Platte auf deren Längsachse je ein Passkörper vorgesehen, sodass die Ausrichtung in vorteilhafter Weise an weit auseinander liegenden Ausrichtstellen erfolgt.

Die Passkörper können die Form eines prismatischen, an der Oberseite eben abgestumpften Körpers besitzen, von dessen Oberseite weg sich zu beiden Seiten der Längsachse ebene Passflanken zueinander divergierend nach unten erstrecken und zur Längsachse der Platte parallele Ebenen definieren.

Die mit den Passkörpern der Platte zusammenwirkenden Passflächen des jeweiligen Werkzeughalters können durch Innenflächen zumindest einer in der Grundfläche des Werkzeughalters vertieften Nut gebildet sein.

Vorzugsweise erstreckt sich die jeweilige Nut in der Grundfläche über einen über den Bereich des jeweiligen Passkörpers hinausgehenden Längenbereich, wobei die Anordnung so getroffen sein kann, dass für jeden Passkörper eine Nut vorgesehen ist, deren Innenflächen keine ebenen Flächen bilden müssen. Vielmehr kann vorgesehen sein, dass der Nutgrund und/oder Seitenflächen dergestalt ballig gewölbt ist bzw. sind, dass sich die Nuttiefe bzw. Nutbreite von deren offenem Ende ausgehend nach einwärts verringert bzw. verringern.

Alternativ kann eine einzige, in der Grundfläche des Werkzeughalters für beide Passkörper durchgehend ausgebildete, ebene Passflächen aufweisende Nut vorgesehen sein.

Nachstehend ist die Erfindung anhand von in der Zeichnung dargestellten Ausführungsbeispielen im Einzelnen erläutert. Es zeigen:
- Fig. 1: eine perspektivisch, abgebrochen und auseinandergezogen gezeichnete Schrägansicht eines Umfangsabschnittes der Werkzeugscheibe eines Ausführungsbeispieles der erfindungsgemäßen Werkzeugrevolvers, wobei ein Werkzeughalter in von der Aufnahme an der Werkzeugscheibe abgehobener Stellung dargestellt ist;
- Fig. 2: eine teilweise aufgeschnittene perspektivische Teildarstellung, die den Bereich einer Aufnahme an der Werkzeugscheibe und eine Hälfte des an dieser Aufnahme anzubringenden Werkzeughalters zeigt, und
- Fig. 3: eine der Fig. 2 ähnliche Darstellung, wobei jedoch ein abgewandeltes Ausführungsbeispiel gezeigt ist.

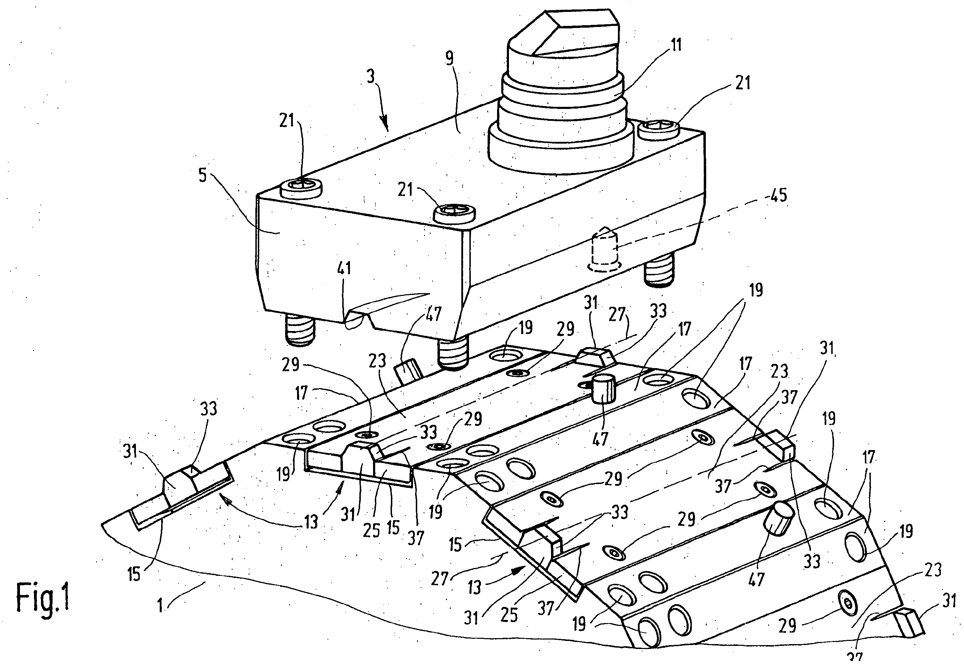

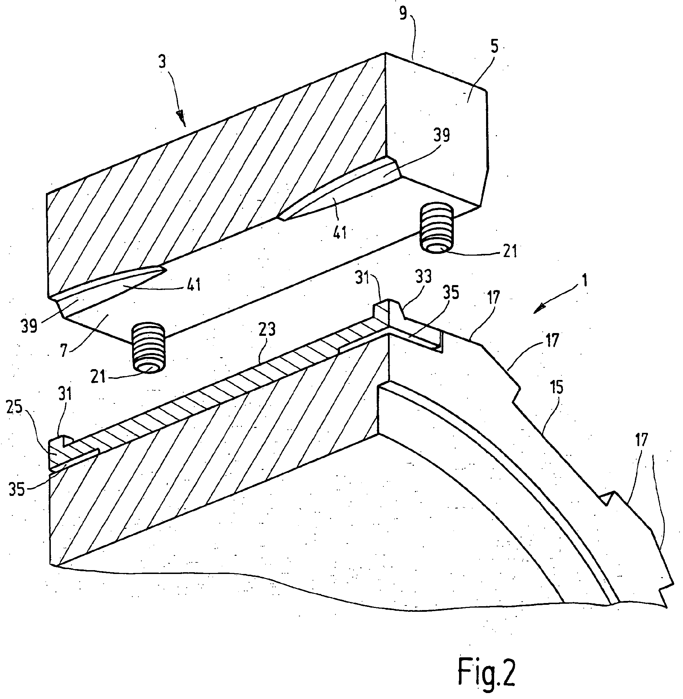

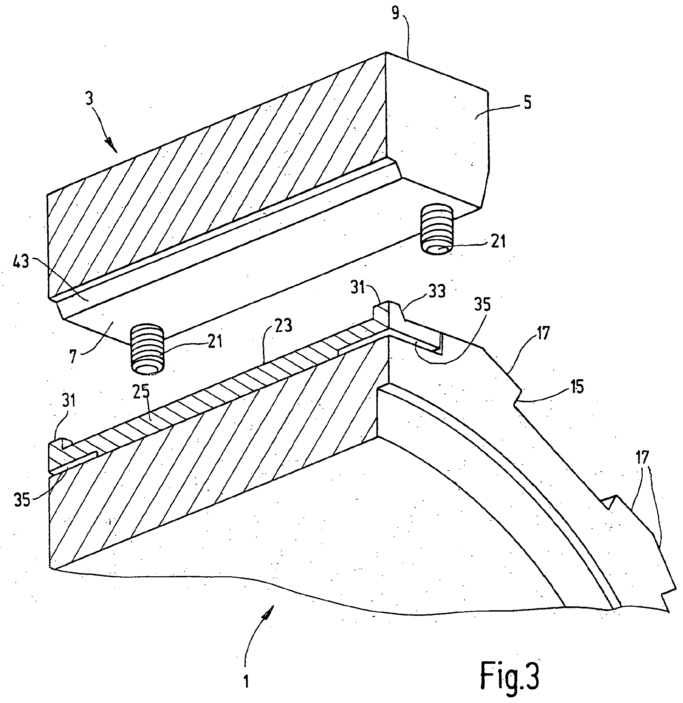

In Fig. 1, auf die zunächst Bezug genommen wird, ist ein Umfangsabschnitt einer als Ganzes mit 1 bezeichneten Werkzeugscheibe dargestellt, die Bestandteil eines Werkzeugrevolvers ist. Da die übrigen Komponenten des Werkzeugrevolvers, die nicht in der vorliegenden Zeichnung dargestellt sind, von üblicher Bauweise sein können, erübrigt sich eine diesbezügliche nähere Erläuterung. Fig. 1 zeigt außerdem einen als Ganzes mit 3 bezeichneten Werkzeughalter, dargestellt in einer von der Werkzeugscheibe 1 abgehobenen Stellung, d. h. vor dem Anbringen an einer betreffenden Aufnahme der Werkzeugscheibe 1. Der Werkzeughalter 3 weist einen im großen Ganzen quaderförmigen Grundkörper 5 mit rechteckförmigem Umriss auf, wobei am Grundkörper 5 eine bodenseitige, ebene Grundfläche 7 (Fig. 2 und 3) vorhanden ist. Aus der ebenen Oberseite 9 erstreckt sich ein im Grundkörper 5 sitzendes Bearbeitungswerkzeug 11 nach oben, bei dem es sich beim vorliegenden Beispiel um einen stark schematisch vereinfacht gezeichneten Drehmeißel handelt. Wie aus Fig. 1 ersichtlich ist, ist das Bearbeitungswerkzeug 11 aus dem Zentralbereich der Oberseite 9 heraus versetzt.

Die Werkzeugscheibe 1 weist an ihrem Außenumfang in üblicher Weise eine Mehrzahl von Werkzeugstationen 13 auf, deren jede an der Werkzeugscheibe 1 eine umfangsseitige ebene Fläche bildet, wobei sich diese Flächen parallel zur nicht gezeigten Revolverachse erstrecken. Jede dieser Werkzeugstationen 13 weist eine im Umriss rechteckförmige Vertiefung 15 auf, die sich zentral zwischen unvertieften, seitlichen Befestigungsflächen 17 befindet, in denen Gewindebohrungen 19 vorgesehen sind, die es ermöglichen, einen an einer betreffenden Werkzeugstation 13 festzulegenden Werkzeughalter 3 mittels in dessen Grundkörper 5 sitzenden Spannschrauben 21 durch Verschrauben festzulegen.

An jeder Werkzeugstation 13 ist für den jeweils anzubringenden Werkzeughalter 3 eine Aufnahme vorgesehen, die nach oben hin eine ebene Plattenfläche 23 ausbildet. Die dahingehende Plattenfläche 23 ist beidseitig entlang ihren längsrändern von länglichen Anlageflächen 17 der Werkzeugscheibe 1 begrenzt: Diese können mit ihrer Oberseite geringfügig über die Oberseite der Plattenfläche 23 vorstehen, so dass der jeweilige Werkzeughalter 3 mit seiner Grundfläche 7 randseitig auf den genannten Anlageflächen 17 aufsitzt. Bezogen auf die dahingehende Festlegestellung läßt sich dann der Werkzeughalter 3 mit seinem Grundkörper 5 über die Spannschrauben 21 als Befestigungseinrichtung auf der Oberseite der Werkzeugscheibe 1 im Bereich der jeweiligen Aufnahme 25 festlegen. Die Plattenfläche 23 bildet im großen Ganzen die Form eines rechteckigen Parallelflach aus, welches eine zentrale Längsachse 27 definiert, die sich parallel zur Revolverachse erstreckt. Jede dieser Platten 25 ist in der zugehörigen Vertiefung 15 mittels in der ebenen Plattenfläche 23 versenkten Befestigungsschraube 29 in genau definierter Ausrichtposition an der Werkzeugscheibe 1 befestigbar.

Die Platten 25 weisen auf der Längsachse 27 liegend an beiden Plattenenden je einen aus der Plattenfläche 23 vorstehenden Passkörper 31 auf. Dieser besitzt eine an der Oberseite eben abgeflachte prismatische Form, wobei sich, von der ebenen Oberseite ausgehend, schräge Passflanken 33 zueinander divergierend, zu beiden Seiten der Längsachse 27 nach unten erstrecken. Sofern der Passkörper 31 ballig geformte schräge Passflanken 33 aufweist, ergibt sich dergestalt eine Linienberührung mit erhöhter Justiergenauigkeit für den Werkzeughalter 3.

Wie aus der Zeichnung ersichtlich, siehe hierzu insbesondere Fig. 2 und 3, befindet sich unterhalb der Passkörper 31 an der Unterseite jeder Platte 25 ein in der Zeichnung übertrieben groß dargestellter Spielraum 35, gebildet durch eine bereichsweise Schwächung der Stärke der Platte 25, sodass sich in der Platte 25 eine eng begrenzte elastische Nachgiebigkeit der Passkörper 31 in zur Plattenfläche 23 senkrechter Richtung ergibt. Es sei bemerkt, dass linienförmige Einprägungs- oder Vertiefungsrillen 37 seitlich des jeweiligen Passkörpers 31 verlaufen können. Insgesamt ergibt sich eine Federnachgiebigkeit mit sehr hoher Federkonstante und entsprechend geringem Federweg, der vorzugsweise im Mikrometerbereich liegt.

Für die Zusammenwirkung mit den Passkörpern 31 sind an der Grundfläche 7 der Werkzeughalter 3 in der Grundfläche 7 vertiefte Passflächen vorgesehen. Bei dem in Fig. 1 und 2 gezeigten ersten Ausführungsbeispiel handelt es sich hierbei um Innenflächen 39 je einer für jeden Passkörper 31 eigens vorgesehenen, in die Grundfläche 7 eingearbeitete Nut 41. Wie ersichtlich, ist die Nut 41 jeweils am Ende der Grundfläche 7 offen, besitzt am offenen Ende die größte Nuttiefe und Nutbreite und erstreckt sich, vom offenen Ende ausgehend, mit leicht ballig gewölbten Innenflächen über einen Längenbereich, der sich über den Bereich der Passkörper 31 hinaus erstreckt, wobei die ballige Wölbung jeder Nut 41 so gewählt ist, dass sich Nutbreite und Nuttiefe verringern. Es besteht aber auch die Möglichkeit einer bevorzugten Ausführung mit geradlinig verlaufenden Nutverläufen.

Aufgrund der Zusammenwirkung der Passflanken 33 und der mit hoher Federkonstante elastisch nachgiebigen Passkörper 31 mit den in beschriebener Weise ausgebildeten Passflächen der Nut 41 des Werkzeughalters 3 ist eine äußerst genau definierte Lagebeziehung zwischen der die jeweilige Aufnahme bildenden Platte 25 an der Werkzeugscheibe 1 und dem Grundkörper 5 des Werkzeughalters 3 sichergestellt. Dies bedeutet, dass bei lagedefinierter Festlegung der Platten 25 an den Werkzeugstationen 13 der Werkzeugscheibe 1, was unter Verwendung einer kalibrierten Lehre, etwa eines sogenannten Master-Stückes, erfolgen kann, zwangsläufig jeder Werkzeughalter 3, der mit seinem Grundkörper 5 mit der Platte 25 justiert wird, die genaue, gewünschte Einstellposition einnimmt, sodass ein Auswechseln und/oder Anbringen von Werkzeughaltern 3 an der Werkzeugscheibe 1 ohne weitergehende Justiermaßnahmen erfolgen kann.

Fig. 3 zeigt ein Ausführungsbeispiel, das sich vom Beispiel von Fig. 1 und 2 nur insofern unterscheidet, als anstelle gesonderter Nuten 41, wie sie beim erstbeschriebenen Beispiel für jeden Passkörper 31 vorgesehen sind, eine entlang der Längsachse durchgehende Nut 43 vorgesehen ist, wobei keine ballige Wölbung der Innenflächen vorgesehen ist, sodass bei diesem Beispiel ebene Passflächen gebildet werden, die mit den Passkörpern 31 zusammenwirken. Ein derartiges Ausführungsbeispiel kann vorteilhaft zur Anwendung kommen, wenn bei dem vorgesehenen Einsatzzweck keine absolute Lagedefinition entlang der Längsachse 27 wesentlich ist. Wenn dies zutrifft, lässt sich bei einem solchen Ausführungsbeispiel der Vorteil ausnutzen, dass das Zubringen eines Werkzeughalters 3 für die Befestigung an der Aufnahme der Werkzeugstätion 13 und das Wegführen eines von der Aufnahme an der Werkzeugscheibe 1 zu entfernenden Werkzeughalters 3 mit einer Verschiebebewegung entlang der Längsachse 27 erfolgen kann, was die Durchführung automatisierter Werkzeugwechselvorgänge begünstigen kann.

Es sei noch bemerkt, dass, um die Lage des Werkzeughalters 3 in Richtung der Längsachse 27 zu fixieren, im Grundkörper 5 der Werkzeughalter 3 jeweils eine aus dem Zentralbereich versetzte, an der Grundfläche 7 offene Sackbohrung 45 vorgesehen ist, die beim Anbringen des Werkzeughalters 3 an der Werkzeugstation 13 jeweils einen aus der Befestigungsfläche 17 vorstehenden Stift 47 aufnimmt, so dass insoweit eine Stiftpassung realisiert ist.

## Patentansprüche

1. Werkzeugrevolver, insbesondere für Werkzeugmaschinen, mit einer um eine Revolverachse drehbaren Werkzeugscheibe (1), die eine Mehrzahl von entlang ihres Umfanges verteilten Werkzeugstationen (13) aufweist, die durch Drehen der Werkzeugscheibe (1) jeweils in mindestens eine Arbeitsposition einstellbar sind, wobei an zumindest einem Teil der Werkzeugstationen (13) eine Aufnahme (25) für einen Werkzeughalter (3) vorhanden ist und jeweils eine Befestigungseinrichtung vorgesehen ist, um einen jeweiligen Werkzeughalter (3) an einer betreffenden Aufnahme (25) in definierter Positionierung festzulegen, wobei zur Positionierung als Ausrichtmittel zumindest ein aus der Aufnahme (25) vorstehender, senkrechter Passkörper (31) sowie in einer Grundfläche (7) des Werkzeughalters (3) vertiefte Passflächen (41;43) zur Zusammenwirkung mit dem zumindest einen Passkörper (31) vorgesehen sind, **dadurch gekennzeichnet, dass** der jeweilige Passkörper (31) elastisch nachgiebig ist und dass für den Erhalt der dahingehenden Federnachgiebigkeit unterhalb des jeweiligen Passkörpers (31) zwischen der Unterseite der Aufnahme (25) und der zugewandten Fläche der Werkzeugscheibe (1) ein geringer Spielraum (35) vorhanden ist.

2. Werkzeugrevolver nach Anspruch 1, **dadurch gekennzeichnet, dass** als Aufnahme an den jeweiligen Werkzeugstationen (13) jeweils eine mit der Werkzeugscheibe (1) verbundene Platte (25) vorhanden ist, die mit ihrer, bezogen auf die Revolverachse, radial außen liegenden, ebenen Fläche (23) beidseitig Anlageflächen (17) der Werkzeugscheibe (1) begrenzt, welche sich in einer zur Revolverachse parallelen Ebene erstrecken und an denen der jeweils zuordenbare Werkzeughalter (3) mit seiner Grundfläche (7) in Anlage bringbar ist.

3. Werkzeugrevolver nach Anspruch 1 oder 2, **dadurch gekennzeichnet, dass** die Befestigungseinrichtung Spannmittel aufweist, vorzugsweise in Form einer Verschraubung (21), um die Grundfläche (7) des Werkzeughalters (3) mit der jeweils zuordenbaren Anlagefläche (17) der Werkzeugscheibe (1) zu verspannen.

4. Werkzeugrevolver nach Anspruch 2 oder 3, **dadurch gekennzeichnet, dass** die Platte (25) im großen Ganzen die Form eines Parallelflach mit rechteckförmigem, eine zentrale, zur Revolverachse parallele Längsachse (27) definierendem Umriss besitzt.

5. Werkzeugrevolver nach Anspruch 4, **dadurch gekennzeichnet, dass** an beiden Enden der Platte (25) auf deren Längsachse (27) je ein Passkörper (31) vorgesehen ist.

6. Werkzeugrevolver nach Anspruch 5, **dadurch gekennzeichnet, dass** die Passkörper (31) die Form eines prismatischen, an der Oberseite eben abgestumpften Körpers besitzen, von dessen Oberseite weg sich zu beiden Seiten der Längsachse (27) ebene Passflanken (33) zueinander divergierend nach unten erstrecken und zur Längsachse (27) der Platte (25) parallele Ebenen definieren.

7. Werkzeugrevolver nach Anspruch 5 oder 6, **dadurch gekennzeichnet, dass** die mit den Passkörpern (31) der Platte (25) zusammenwirkenden Passflächen des jeweiligen Werkzeughalters (3) durch Innenflächen (39) zumindest einer in der Grundfläche (7) des Werkzeughalters (3) vertieften Nut (41; 43) gebildet sind.

8. Werkzeugrevolver nach Anspruch 7, **dadurch gekennzeichnet, dass** sich die jeweilige Nut (41; 43) in der Grundfläche (7) über einen über den Bereich des jeweiligen Passkörpers (31) hinausgehenden Längenbereich und, bei an der Werkzeugstation (13) angebrachtem Werkzeughalter (3), entlang der Längsachse (27) der Platte (25) erstreckt.

9. Werkzeugrevolver nach den Ansprüchen 5 und 8, **dadurch gekennzeichnet, dass** für jeden Passkörper (31) je eine sich über eine Teillänge der Grundfläche (7) des Werkzeughalters (3) erstreckende Nut (41) vorgesehen ist, deren Nutgrund und/oder Seitenflächen (39) dergestalt ballig gewölbt ist bzw. sind, dass sich die Nuttiefe bzw. Nutbreite von deren offenem Ende ausgehend nach einwärts verringert bzw. verringern.

10. Werkzeugrevolver nach den Ansprüchen 5 und 8, **dadurch gekennzeichnet, dass** eine in der Grundfläche (7) des Werkzeughalters (3) für beide Passkörper (31) durchgehend ausgebildete, ebene Passflächen aufweisende Nut (43) vorgesehen ist.

11. Werkzeugrevolver nach einem der Ansprüche 2 bis 10, **dadurch gekennzeichnet, dass** die die Aufnahme bildende Platte (25) an der Werkzeugscheibe (1) mittels einer Verschraubung (29) in einer genau definierten, vorzugsweise mit Hilfe einer Lehre, insbesondere in Form eines Master-Stückes, bestimmten Ausrichtlage befestigbar ist.

12. Werkzeugrevolver nach einem der Ansprüche 1 bis 11, **dadurch gekennzeichnet, dass** eine Lagefixierung des Werkzeughalters (3) entlang der Längsachse (27) mit Hilfe einer Stiftpassung (45,47) erfolgt.

## Claims

1. A tool revolver, in particular for machine tools, having a tool disc (1) which can turn about a revolver axis and which has a plurality of tool stations (13) which are distributed along its periphery and which can be set by turning the tool disc (1) into at least one working position at a time, on at least some of the tool stations (13) there being a receiver (25) for a tool holder (3) and one respective fastening means being provided in order to fix a respective tool holder (3) on a respective receiver (25) in defined positioning, for positioning there being provided as alignment means at least one vertical fitting body (31) projecting from the receiver (25) and fitting surfaces (41;43) recessed in a base surface (7) of the tool holder (3) for interaction with the at least one fitting body (13), **characterised in that** the respective fitting body (31) is elastically resilient and that there is a small amount of clearance (35) beneath the respective fitting body (31) between the lower side of the receiver (25) and the facing surface of the tool disc (1) in order to retain this spring resilience.

2. The tool revolver according to Claim 1, **characterised in that** the receiver on the respective tool stations (13) is a plate (25) respectively connected to the tool disc (1) and which, with its flat surface (23) which lies radially outside relative to the revolver axis, borders contact surfaces (17) of the tool disc (1) on both sides, which surfaces extend in a plane parallel to the revolver axis and with which the respectively assignable tool holder (3) with its base surface (7) can be brought into contact.

3. The tool revolver according to Claim 1 or 2, **characterised in that** the fastening means has clamping means, preferably in the form of a screw union (21) in order to brace the base surface (7) of the tool holder (3) with the respectively assignable contact surface (17) of the tool disc (1).

4. The tool revolver according to Claim 2 or 3, **characterised in that** the plate (25) largely has the shape of a parallelepiped with a rectangular outline which defines a central longitudinal axis (27) which is parallel to the revolver axis (27).

5. The tool revolver according to Claim 4, **characterised in that** there is one fitting body (31) on each of the two ends of the plate (25) on its longitudinal axis (27).

6. The tool revolver according to Claim 5, **characterised in that** the fitting bodies (31) have the shape of a prismatic body which is blunt on the top, away from its top to both sides of the longitudinal axis (27) flat fitting flanks (33) diverging from one another extending down and defining planes which are parallel to the longitudinal axis (27) of the plate (25).

7. The tool revolver according to Claim 5 or 6, **characterised in that** the fitting surfaces of the respective tool holder (3) which interact with the fitting bodies (31) of the plate (25) are formed by inside surfaces (39) of at least one groove (41; 43) which has been recessed in the base surface (7) of the tool holder (3).

8. The tool revolver according to Claim 7, **characterised in that** the respective groove (41; 43) in the base surface (7) extends over a longitudinal area beyond the area of the respective fitting body (31) and, when the tool holder (3) has been mounted on the tool station (13), along the longitudinal axis (27) of the plate (25).

9. The tool revolver according to Claims 5 and 8, **characterised in that** for each fitting body (31) there is a groove (41) which extends over a partial length of the base surface (7) of the tool holder (3), the groove base and/or side surfaces (39) of which is or are crowned such that the groove depth and/or groove width proceeding from its open end decrease/s inwardly.

10. The tool revolver according to any of Claims 5 and 8, **characterised in that** there is a groove (43) which has flat fitting surfaces and which is made continuous in the base surface (7) of the tool holder (3) for the two fitting bodies (31).

11. The tool revolver according to any of Claims 2 to 10, **characterised in that** the plate (25) which forms the receiver can be mounted on the tool disc (1) by means of a screw union (29) in a precisely defined alignment position which is determined preferably with the aid of a rule, in particular in the form of a master part.

12. The tool revolver according to any of Claims 1 to 11, **characterised in that** the tool holder (3) is positioned along the longitudinal axis (27) with the aid of a pin fit (45, 47).

## Revendications

1. Tourelle d'outil, notamment pour des machines-outils, comprenant un disque (1) d'outil, qui peut tourner autour d'un axe de la tourelle et qui a plusieurs postes (13) d'outil répartis sur son pourtour et pouvant être mis par rotation du disque (1) d'outil respectivement dans au moins une position de travail, dans laquelle il y a, sur au moins une partie des postes (13) d'outil, un logement (25) pour un porte-outil (3) et il est prévu respectivement un dispositif de fixation pour fixer un porte-outil (3) respectif sur un logement (25) concerné en un positionnement défini, dans laquelle il est prévu, pour le positionnement, comme moyen d'orientation, au moins un pion (31) d'indexation verticale en saillie du logement (25), ainsi que des surfaces (41, 43) d'indexation creusées dans une surface (7) dé base du porte-outil (3) pour coopérer avec le au moins un pion (31) d'indexation, **caractérisée en ce que** le pion (31) d'indexation respectif cède élastiquement et **en ce que**, pour obtenir l'élasticité d'un ressort, il y a en dessous du pion (31) d'indexation un jeu (35) petit entre le côté inférieur du logement (25) et la surface opposée du disque (1) d'outil.

2. Tourelle d'outil suivant la revendication 1, **caractérisée en ce qu'**il y a comme logement aux postes (13) d'outil respectifs respectivement un plateau (25), qui est relié au disque (1) d'outil et qui délimite, par sa surface (23) plane se trouvant à l'extérieur radialement par rapport à l'axe de la tourelle, des deux côtés des surfaces (17) de contact du disque (1) d'outil, qui s'étendent dans un plan parallèle de la tourelle et sur lesquelles le porte-outil (3) pouvant être associé respectivement peut être mis en contact par sa surface (7) de base.

3. Tourelle d'outil suivant la revendication 1 ou 2, **caractérisée en ce que** le dispositif de fixation a des moyens de serrage, de préférence sous la forme d'un vissage (21), pour serrer la surface (7) de base du porte-outil (3) avec la surface (7) de contact pouvant être associée du disque (1) d'outil.

4. Tourelle d'outil suivant la revendication 2 ou 3, **caractérisée en ce que** le plateau (25) a en gros la forme d'un plat parallèle ayant un contour rectangulaire définissant un axe (27) longitudinal central parallèle à l'axe de la tourelle.

5. Tourelle d'outil suivant la revendication 4, **caractérisée en ce qu'**il est prévu respectivement un pion (31) d'indexation aux deux extrémités du plateau (25) sur son axe (27) longitudinal.

6. Tourelle d'outil suivant la revendication 5, **caractérisée en ce que** le pion (31) d'indexation a la forme d'un pion prismatique tronqué en plan du côté supérieur, du côté supérieur duquel s'éloignent, vers les deux côtés de l'axe (27) longitudinal, des flancs (33) d'indexation plans en divergeant l'un de l'autre et définissent des plans parallèles à l'axe (27) longitudinal du plateau (25).

7. Tourelle d'outil suivant la revendication 5 ou 6, **caractérisée en ce que** les surfaces d'indexation coopérant avec les pions (31) d'indexation du plateau (25) du porte-outil (3) respectif sont formées par des surfaces (39) intérieures d'au moins une rainure (41, 43) creusée dans la surface (7) de base du porte-outil (3).

8. Tourelle d'outil suivant la revendication 7, **caractérisée en ce que** la rainure (41, 43) respective, dans la surface (7) de base, s'étend sur une partie longitudinale allant au-delà de la partie du pion (31) d'indexation respectif et, alors que le porte-outil (3) mis au poste (13) d'outil, le long de l'axe (27) longitudinal du plateau (25).

9. Tourelle d'outil suivant les revendications 5 et 8, **caractérisée en ce qu'**il est prévu, pour chaque pion (31) d'indexation respectivement une rainure (41), qui s'étend sur une partie de la longueur de la surface (7) de base du porte-outil (3) et dont le fond et/ou les surfaces (39) latérales est ou sont convexes, de manière à ce que le fond de la rainure ou la largeur de la rainure diminue vers l'intérieur en partant de l'extrémité ouverte.

10. Tourelle d'outil suivant les revendications 5 et 8, **caractérisée en ce qu'**il est prévu une rainure (43) formée de manière continue dans la surface (7) de base du porte-outil (3) pour deux pions (31) d'indexation et ayant des surfaces d'indexation planes.

11. Tourelle d'outil suivant l'une des revendications 2 à 10, **caractérisée en ce que** le plateau (25) formant le logement peut être fixé sur le disque (1) d'outil au moyen d'un vissage (29) en une position orientée déterminée, définie de préférence à l'aide d'un gabarit, notamment sous la forme d'une pièce maître.

12. Tourelle d'outil suivant l'une des revendications 1 à 11, **caractérisée en ce qu'**une immobilisation en position du porte-outil (3) s'effectue le long de l'axe (27) longitudinal à l'aide d'un ajustement (45, 47) par broche.
